(19) **Europäisches Patentamt / European Patent Office / Office européen des brevets**

(11) **EP 4 128 660 B1**

(12) ## EUROPEAN PATENT SPECIFICATION

(45) Date of publication and mention
of the grant of the patent:
**06.05.2026  Bulletin 2026/19**

(21) Application number: **20715341.2**

(22) Date of filing: **27.03.2020**

(51) International Patent Classification (IPC):
**H04L 41/0631** (2022.01)      **H04L 41/142** (2022.01)

(52) Cooperative Patent Classification (CPC):
**H04L 41/142; H04L 41/0631**

(86) International application number:
**PCT/EP2020/058706**

(87) International publication number:
**WO 2021/190760 (30.09.2021 Gazette 2021/39)**

(54) **DETERMINING AN ALARM CONDITION**

BESTIMMUNG EINES ALARMZUSTANDS

DÉTERMINATION D'UNE CONDITION D'ALARME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.02.2023  Bulletin 2023/06**

(73) Proprietor: **Telefonaktiebolaget LM Ericsson
(publ.)**
**16483 Stockholm (SE)**

(72) Inventors:
• **GEMME, Luciano**
  **16152 Genova (IT)**
• **CAPPELLI, Marco**
  **16152 Genova (IT)**

(74) Representative: **Ericsson
Patent Development
Torshamnsgatan 21-23
164 80 Stockholm (SE)**

(56) References cited:
**WO-A1-2018/160177     US-A1- 2019 102 718**

## Description

Technical Field

Embodiments disclosed herein relate to methods and apparatus for determining alarm conditions in equipment, for example communications network equipment.

Background

The alarm condition of various equipment, such as communications network equipment, may be determined and used by an operator of that equipment to monitor that the equipment is operating within normal parameters or to take corrective action if it is not. For example in communications equipment, a traffic load or error rate above a threshold may indicate that operator action is required such as provisioning additional capacity and/or identifying equipment faults or failure.

The alarm condition may be determined by predicting certain operating parameter values of the equipment using received or measured parameter values together with a prediction model. The prediction model may use trends in the received values in order to predict future values which may then be compared with the future actual or received value to determine a difference or residual between the actual and predicted value. An increasing residual may indicate an anomaly which can be used to trigger an alert and may be indicative of a fault in equipment somewhere in a network, a malicious attack or even bad weather.

One category of predictive model used is an autoregressive integrated moving average (ARIMA) which provides a "next" value in a data series showing seasonality or repeated trends, for example over a day, week or year. For example, the traffic load in a communications network can follow a seasonality of a day with peaks during working hours and lower values during the night. The seasonality has a repeatability frequency measured for example in hours, days or weeks. ARIMA models may use a higher weighting for more recent data which enables them to quickly detect a sudden anomaly. However, such models are less well able to detect slowly arising anomalies because the slowly changing values may be "learned" and considered part of a new normal trend.

WO 2018/160177 A1 relates to techniques for detecting anomalous values in data streams using forecasting models.

US 2019/102718 A1 relates to predictive analysis techniques as applied to business variables.

Summary

According to certain embodiments described herein there is a method for determining an alarm condition in equipment according to claim 1. The method comprises receiving values of an operating parameter of the equipment over time, calculating first predicted values of the operating parameter at future times using a first model over a first time series of the received values and calculating second predicted values of the operating parameter at the future times using a second model over a second and different time series of the received values. The method then determines the alarm condition using the first and second predicted values.

By predicting operating parameter values using modelling over two different time series of received or measured values, an improved determination of an alarm condition can be achieved. This may include detecting anomalies associated with slowly changing as well as fast changing parameter values. In addition, anomalies may be detected more quickly.

According to certain embodiments described herein there is provided an apparatus for determining an alarm condition in equipment according to claim 7. The apparatus comprises a processor and memory which contains instructions executable the processor whereby the apparatus is operative to receive values of an operating parameter of the equipment over time, calculate first predicted values of the operating parameter at future times using a first model over a first time series of the received values, calculate second predicted values of the operating parameter at the future times using a second model over a second and different time series of the received values, and determine an alarm condition using the first and second predicted values.

According to certain embodiments described herein there is provided a computer program comprising instructions which, when executed on a processor, causes the processor to carry out the methods described herein. The computer program may be stored on a non transitory computer readable media. The protection scope of the disclosure is defined by the accompanying claims.

Brief Description of Drawings

For a better understanding of the embodiments of the present disclosure, and to show how it may be put into effect, reference will now be made, by way of example only, to the accompanying drawings, in which:

Figure 1 is a schematic diagram illustrating a communications system according to some embodiments;

Figure 2 is a flow diagram illustrating a method according to some embodiments;

Figure 3 is a schematic diagram illustrating determination of an alarm condition according to some embodiments;

Figure 4 is a graph showing various parameters used according to some embodiments;

Figure 5 is a detail of part of the graph of Figure 4; and

Figure 6 is a schematic diagram illustrating the architecture of an apparatus according to an embodiment.

Detailed description

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step.

Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description. The following sets forth specific details, such as particular embodiments or examples for purposes of explanation and not limitation. It will be appreciated by one skilled in the art that other examples may be employed apart from these specific details. In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Nodes that communicate using the air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analogue) circuitry including but not limited to application specific integrated circuit(s) (ASIC) and/or field programmable gate array(s) (FPGA(s)), and (where appropriate) state machines capable of performing such functions. Memory may be employed to storing temporary variables, holding and transfer of data between processes, non-volatile configuration settings, standard messaging formats and the like. Any suitable form of volatile memory and non-volatile storage may be employed including Random Access Memory (RAM) implemented as Metal Oxide Semiconductors (MOS) or Integrated Circuits (IC), and storage implemented as hard disk drives and flash memory.

Embodiments described herein relate to methods and apparatus for determining an alarm condition in equipment using modeling of two different time series of received values to calculate respective predicted values. The use of models for two time series allows for an improved alarm condition determination, for example being able to detect anomalies in both fast and slow changing values.

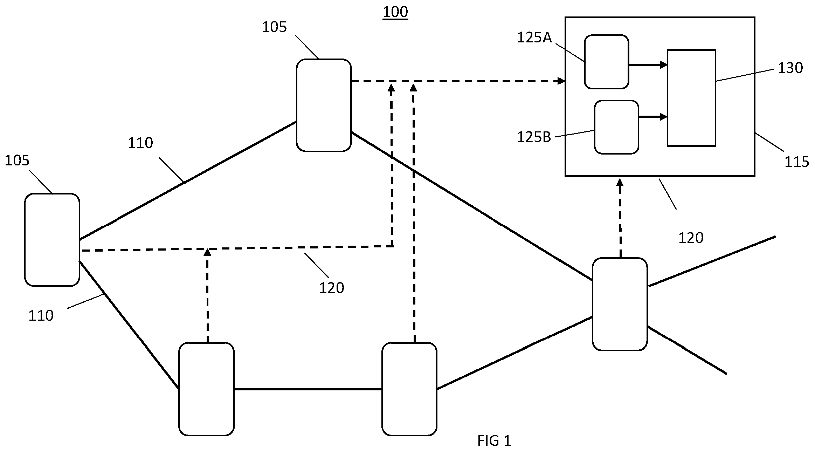

Figure 1 is a schematic diagram illustrating a communications network 100 according to an embodiment and comprising a number of nodes or equipment 105 coupled by communications links 110. The network may be a core network having routers, switches and data servers 105 connected by optical or electrical links 110 operating according to predetermined protocols such Medium Access Control (MAC), Internet Protocol (IP), Stream Control Transmission Protocol (SCTP). The network may be a radio network including one or more mobile devices 105 connecting to each other and/or a cellular base station 105 using radio links 110 operating according to predetermined protocols such as those employed by 3GPP standards including Fifth Generation New Radio (5G NR) and Long Term Evolution (LTE). Of course, the network and equipment are not limited to these examples and many other types of network and equipment may be used in embodiments. The equipment 105 may measure or calculate various operating parameters such as traffic load and error parameters for example number and dimension of IP packets over a predetermined time, number of selected packet types

3

(UDP - User Datagram Protocol - or ICMP -Internet Control Message Protocol), number of error flags in packets. Traffic load may include the quantity of packets or bits processed within the equipment or through individual ports coupling to the links 110. Traffic error may include measures such as packet error rate (PER), bit error rate (BER) and/or many other available traffic error operating parameters. The values of these operating parameters are forwarded over reporting channels 120 to a network monitoring system 115 connected to or forming part of the network 100.

The network monitoring system 115 processes the received operating parameter values using two or more models 125A and 125B to make predictions about future values. The models are provided with different time series of the received values. For example, one model 125A may process a time series focusing on the most recent received values whereas another model 125B may process a different time series having older and/or a bigger range of received values. The predicted values from each model 125A and 125B are used by a calculation unit 130 to determine an alarm condition of the or each equipment, or a part of the network including some equipment, or all of the network 100.

The alarm condition may change between different states for example including: operating normally; anomaly detected; alert that operation of the equipment should be reviewed by an operator; alert that action is needed; automated action such as a reduced performance setting or shut down. Alternatively, the alarm condition may be a number or value indicative of the status of equipment between normal operation and crisis or failure. The alarm condition is based on the value of an alarm parameter compared against one or more thresholds. The value of the alarm parameter may be calculated by performing various operations on the predicted and received values. The operationsinclude determining residuals between each of the first and second predicted values and their corresponding received values. The operations may include summing or averaging the residuals determined using the first and second predicted values. The operations may include determining derivatives of interpolations of the residuals determined using the first and second residuals.

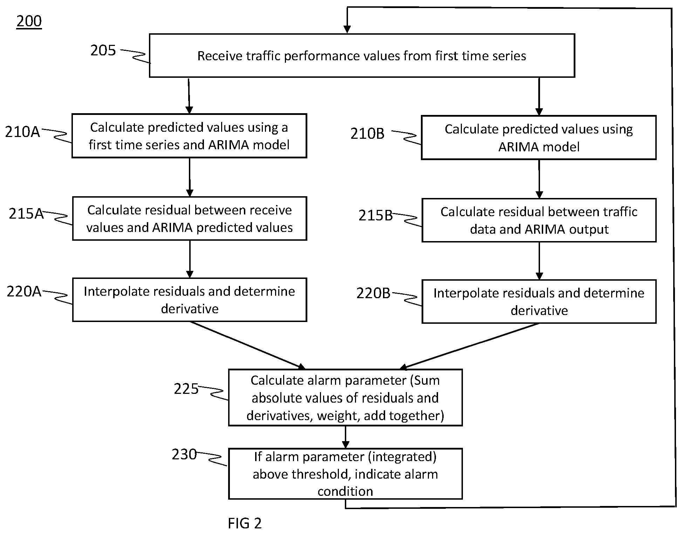

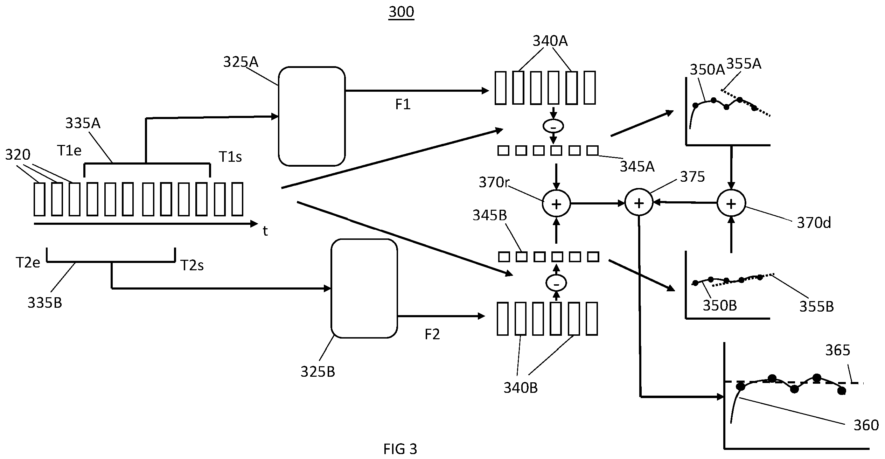

Figure 2 is a flow diagram of a method of determining an alarm condition according to an embodiment. The method may be performed by the network monitoring system 115 of Figure 1 or other equipment monitoring apparatus or indeed by the equipment itself. At step 205, the method receives traffic load data or values as illustrated in the schematic diagram of Figure 3. The values 320 may be received from equipment and may correspond to the value of an operating parameter every predetermined period, for example every second, minute or hour. The values 320 may be stored locally within the monitoring apparatus 300 and may extend over a large historical period. More recent values are shown extending right along the time dimension t.

At step 210A, the method calculates predicted values using a first time series of the received values and an ARIMA model, although other types of models could alternatively be used, for example autoregressive (AR) models, integrated (I) models, moving average (MA) models or various combinations of these, or various types of Markov models such as Hidden Markov model.

An ARIMA or auto regressive integrated moving average model is a class of models used to calculate future predicted values based on past values and past predicted value errors (i.e. the differences or residuals between the received and predicted values for the same time period or index). A generic ARIMA equation is shown below:

$$Yt = \alpha + \beta_1 Y_{t-1} + \beta_2 Y_{t-12} + \ldots + \beta_p Y_{t-p} + \Phi_1 \varepsilon_{t-1} + \Phi_2 \varepsilon_{t-2} + \ldots + \Phi_p \varepsilon_{t-p}$$

where Y is the value at the respected time (t is the future time for the predicted value and t-1, t-2, ... t-p are past times), $\alpha$ is a constant, $\beta$ is the coefficient for the respective past values, $\varepsilon$ is the error between the forecast value and the actual or received value at the respective past times and $\Phi$ is a coefficient for the respective errors. These parameters may be adjusted using experimentation and/or theoretical tools to determine an appropriate first model 325A.

An ARIMA model ARIMA(p,d,q) may be defined by parameters p, d, q where p is the order or number of time lags (consecutive prior values), d is the degree of differencing (the number of times the data have had past values subtracted) and q (the order to the moving average model). Differencing is used on a time series to make it stationary, that is the statistical properties of a processing generating a time series do not change over time. Details of constructing ARIMA models and determining their various parameters will be known to those skilled in this area and are therefore not further described here.

A first time series 335A of the received values 320 corresponding to more recent values is provided to the first model 325A in order to determine a predicted value corresponding to a future time when an actual value will be received. This may be a next time period or a forecast for several time periods in advance of the current received value. The first time series may be for example the five most recent received values, the ten most recent received values, the second most to the eleventh most recent received value or more generally T1s (time series 1 start) to T1e (time series 1 end). The model 325A may be arranged to predict a value F1 (forecast distance for time series 1) periods in advance.

At step 210A a continuous series of predicted values 340A are predicted based on the first time series 335A moving over more recently received values. The predicted values may be stored locally together with their time period or index so that they can be compared with the received value for that time period or index.

At step 215A, residuals or the difference between received and predicted values for respective time periods are calculated to determine a series of residuals 345A. These residuals correspond to the errors $\varepsilon$ noted above in an ARIMA model but may be calculated separately where the model used does not rely upon errors, for example an auto regressive (AR only) model.

At step 220A those residuals are used to calculate derivatives. The derivatives may be calculated by interpolating the residuals 245A to generate a line or curve 350A joining the residual values and where a current derivative may be calculated as the gradient 355A of the curve 350A between the last two residual values as illustrated in the upper right hand graph.

A second time series 335B of the received values 320 being delayed compared with the first time series 335A is provided to a second model 325B in order to determine a predicted value corresponding to a future time when an actual value will be received. This may be a next time period or a forecast for several time periods in advance of the current received value. The second time series may be for example the fifth most recent received values to the twelfth most recent value, the tenth most recent received value to the hundredth most recent value, all historical values or more generally T2s (time series 2 start) to T2e (time series 2 end). The first and second time series may overlap or they may be cover respective non-overlapping ranges of received values 320.

The second model 325B may be the same model as that used in the first model 325A for example an ARIMA having predetermined parameters, or it may be different a different class of model or be an ARIMA having different parameters. The model 325B may be arranged to predict a value F2 (forecast distance for time series 2) periods in advance. Further predicted values 340B are based on the same time series parameters taken over more recently received values. The predicted values may be stored locally together with their time period or index so that they can be compared with the received value for that time period or index.

At step 210B a continuous series of predicted values 340B are predicted based on the second time series 335B moving over more recently received values. The predicted values may be stored locally together with their time period or index so that they can be compared with the received value for that time period or index.

At step 215B, residuals or the difference between received and predicted values for respective time periods are calculated to determine a series of residuals 345B. At step 220B those residuals are used to calculate derivatives. The derivatives may be calculated by interpolating the residuals 245B to generate a line or curve 350B joining the residual values and where a current derivative may be calculated as the gradient 355B of the curve 350B between the last two residual values as illustrated in the middle right hand graph.

At step 225, an alarm parameter is calculated. In an embodiment this is achieved by summing the residuals 345A, 345B together, summing the derivatives 355A, 355B together, and then summing the weighted sums of the residuals and derivatives together to generated alarm parameter which is illustrated as a curve 360 in the lower right graph. An equation for the calculation is shown below:

$$AP_t = x(R1_t + R2_t) + y(D1_t + D2_t) \tag{1}$$

where AP is the alarm parameter (360) at time t, R1 is the residual 340A from the first model for the respective time t, R2 is the residual 340B from the second model 325B for the respective time t, D1 is the derivative or gradient 355A of the first residuals 340A at time t, D2 is the derivative or gradient 355B of the second residuals 340B at time t, and x and y are the weights or coefficients applied to the respective sums of the residuals and derivatives.

In another embodiment the averages of the residuals and derivatives may be used as shown below:

$$AP_t = x[(R1_t + R2_t)/2] + y[(D1_t + D2_t)/2] \tag{2}$$

In yet other embodiments, different calculations may be employed. In some examples, more than one alarm parameter may be calculated using different criteria or equations.

At step 230, the calculated alarm parameter 360 is compared with a threshold 365 and if exceeded may result in an action, e.g. an alarm condition is indicated. Alternatively, the action may only be taken when the threshold is exceeded for a predetermined period of time or for a percentage of time over a moving average. The calculated alarm parameter may be compared to more than one threshold with different actions being taken depending on which threshold has been exceeded.

The level of the alarm parameter, its comparison with one or more thresholds and depending on the embodiment the duration over which the alarm parameter exceeds a threshold correspond to an alarm condition which may be assigned depending on the above and/or other conditions. The alarm condition may vary from various states for example including: operating normally (e.g. below first threshold); anomaly detected (e.g. above first threshold); alert that operation of the equipment should be reviewed by an operator (e.g. above first threshold for a predetermined period); alert that action is needed (e.g. above a second higher threshold); automated action such as a reduced performance setting or shut down (e.g. above the second threshold for a predetermined percentage of a moving window of a predetermined duration).

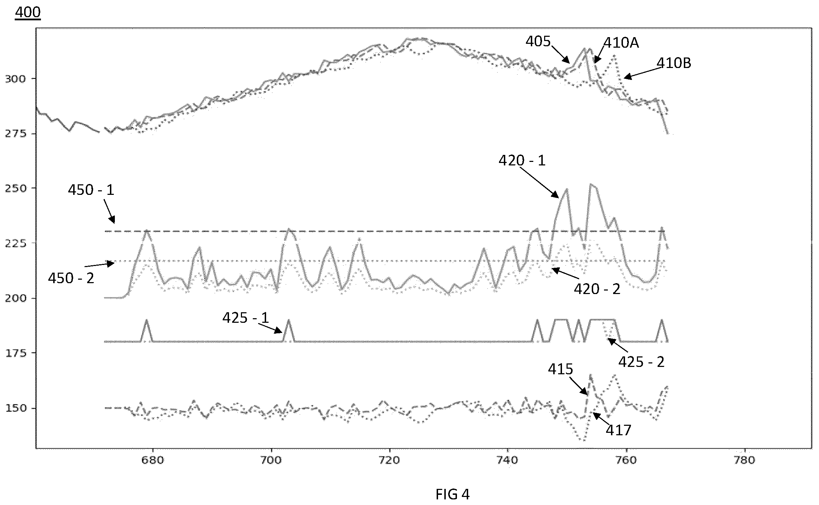

Figure 4 is a graph showing various quantities as described above over a period of time to illustrate the emergence of a new alarm condition. The x-axis (horizontal) shows time and the y-axis (vertical) numerical magnitude. The upper three lines show received or actual values 405, first predicted values 410A from a first model over a first time series of the received values and second predicted values 410B from a second model over a second time series of the received values. As can be seen the magnitude of the received values 405 vary slowly over time but at around time 755 there is a rapid increase and decrease in magnitude forming a peak. Corresponding delayed peaks are seen in the predicted values 410a and 410B.

The lowest set of lines show the first 415 residuals and the second residuals 417 respectively, that is the differences between the received values 405 and the first predicted values 410A and the second predicted values 410B. The magnitude of the residuals is low whilst the predicted values 410A, 410B slowly follow the received values 405 but increase at the time of the peaks corresponding to a rapid divergence between the received values and the predicted values.

The middle lines are calculated alarm parameter magnitudes using equation 1 above (line 420-1 where the residuals and derivatives are summed) and equation 2 above (line 420-2 where the residuals and derivatives are averaged). It can be seen that lines 415, 417 show how the residuals respond to an anomaly with a delay compared to the response of the alarm parameter lines 420-1, 420-2 which include the derivatives.

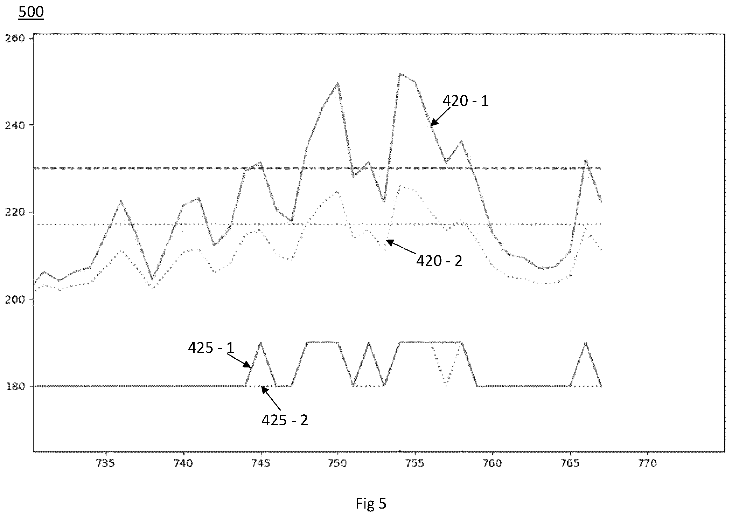

These alarm parameters are associated with respective thresholds 450-1 and 450-2. It can be seen that at the time of the emergence of the peak in the received values the alarm parameter magnitudes for both lines 420-1 and 420-2 exceed their respective thresholds 450-1 and 450-2. Furthermore, the calculated alarm parameters 420-1 and 420-2 exceed their thresholds at an earlier time than the deleted peaks showing in the predicted values 410A, 410B and the residuals 415, 417 which show divergence between predicted and received values. Therefore a change in alarm condition can be indicated earlier. Figure 5 shows the timing of the peak for these curves in more detail.

Figure 5 shows a digitized output for the alarm parameters 420-1, 420-2 exceeding their respective thresholds 450-1, 450-2 is shown as lines 425-1 and 425-2 respectively. The lines 425-1, 425-2 show a binary output indicating if the threshold for parameters 420-1, 420-2 are exceeded. The binary output 425-1, 425-2 shows a change of state from low to high when the respective threshold is exceeded. The longer the duration that the alarm parameter exceeds its threshold, the longer the duration of the high signal as can be seen. A change in alarm condition may occur, for example to initiate an alarm alert, may occur when the duration of the high signal exceeds a predetermined period. This may prevent false alarms which might otherwise be raised every time the alarm threshold exceeds its threshold. Alternatively integration may be employed to register a change of alarm condition depending upon an integrated level over a moving window. It can be seen that the digital output 425-1 for one alarm parameter 420-1 has more high levels than that of the other digital output 425-2 for the other alarm parameter 420-2. The use of one digitized alarm parameter over another may depend on the type of data or received values being monitored or on the kind of anomaly which is being focused on. More than one digitized alarm parameter may be used, each employing the same or different types of received values, for example from different equipment in a network. These may be combined in order to generate an appropriate alarm condition, for example for individual equipment or collections of cooperating equipment such as found in communications networks.

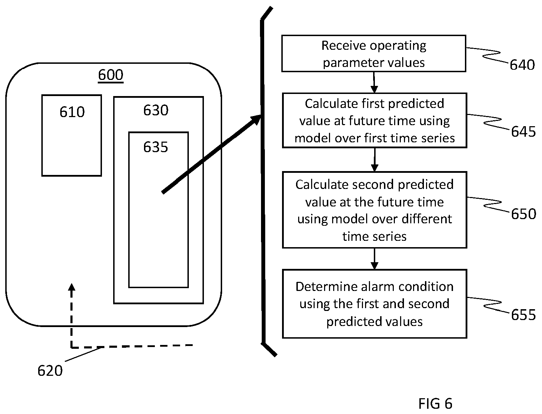

Figure 6 is a schematic of a device which may be used to monitor or determine an alarm condition in one or more equipment according to embodiments. The device 600 comprises a processor 610, memory 630 containing computer program instructions 635 which when executed by the processor cause the processor to carry out methods of the embodiments. An example method is illustrated which includes several steps which may be performed by the device 600.

At a first step 640, the method receives operating parameter values 640 as previously described. At a second step 645, the method calculates first predicted values for a future time using a model over a first time series of received values. This may be an ARIMA model and the first time series may include the most recent received or measured values. At a third step 650, the method may calculate second predicted values for a future time using a second model over a second time series of received values. The second model may be the same as the first model, or a different model. The second time series may extend further into the past than the first time series and may not include the most recent values.

At a fourth step 655, the method determines an alarm condition using the first and second predicted values. The alarm condition may vary from various states for example including: operating normally; anomaly detected; alert that operation of the equipment should be reviewed by an operator; alert that action is needed; automated action such as a reduced performance setting or shut down. The alarm condition is based on an alarm parameter compared against one or more thresholds. The alarm parameter is calculated by performing various operations on the predicted and received values. The operations include determining residuals between each of the first and second predicted values and their corresponding received values. The operations include summing or averaging the residuals determined using the first and second predicted values. The operations includes determining derivatives of interpolations of the residuals determined using the first and second residuals.

Embodiments may provide a number of advantages. Using two (or more) models to provide two forecasts over different time series of the incoming data or values improves anomaly detection, including for example by enhancing not just the residuals between forecasted and real values but also trends of these differences. Interpolating the residuals allows an easily implemented mechanism for determining derivatives which can enhance anomaly detection. The derivatives effectively magnify the trend of the curve of the residuals, improving detection of changes in the normal pattern. As seen above this may allow these anomalies to be detected more rapidly thus allowing a warning or other actions to be issued more quickly. One model may follow the incoming values more closely and therefore identify rapid changes corresponding to an anomaly. The second model with a greater overview of historical data may identify unusual longer term trends corresponding to an anomaly.

Whilst the embodiments are described with respect to monitoring alarm conditions in communications equipment, many other applications are possible including for example electrical supply networks, automated factories [other applications?]

Whilst the embodiments are described with respect to monitoring alarm conditions in communications equipment, many other applications are possible including for example electrical supply networks, automated factories, road traffic analysis.

Various other alternatives may be employed, for example more than two models may be used to generate multiple predictions, each using a different time series of the received values. As already noted ARIMA having the same or different parameters may be employed, or other models may be used. The described residual and derivative sum and average methods for calculating the alarm parameter may be combined or summing used on one of the residuals or derivatives and averaging on the other. Various different ways of determining the alarm condition from the alarm parameter may be employed as previously described.

Various parameters of the models used and for determining the alarm condition based on the calculated alarm parameter may be tested or tuned according to the nature of the data series under monitoring and may be experimentally determined or determined using machine learning based on analysis of previous anomalies.

The monitoring systems or modules may be instantiated in cloud environments such as Docker, Kubenetes or Spark. For example, the network monitoring system 115 including models 125A, 125B and 130 may be implemented in a cloud environment where these modules receive values such as performance data from multiple nodes 105 in a communications network 100, and may combine respective calculated alarm parameters for each node to determine an alarm condition for the network, or for individual nodes 105. Alternatively, they may be implemented in dedicated hardware or within the equipment being monitored.

Modifications and other variants of the described embodiment(s) will come to mind to one skilled in the art having the benefit of the teachings presented in the foregoing descriptions and the associated drawings. Therefore, it is understood that the embodiment(s) is/are not limited to the specific examples disclosed and that modifications and other variants are intended to be included within the scope of this disclosure. Although specific terms may be employed herein, they are used in a generic and descriptive sense only and not for purposes of limitation.

## Claims

1. A method for determining an alarm condition in equipment, the method comprising:

    receiving values (320) of an operating parameter of the equipment (105, 110) over time (205A, 205B);
    calculating (210A) first predicted values (340A) of the operating parameter at future times using a first model (325A) over a first time series (335A) of the received values;
    calculating (210B) second predicted values (340B) of the operating parameter at the future times using a second model (325B) over a second and different time series (335B) of the received values, wherein the first time series (335A) is associated to more recently received values than the second time series (335B);
    determining (225, 230) the alarm condition using the first (340A) and second (340B) predicted values, wherein determining the alarm condition comprises calculating (215A, 215B) first and second residuals (345A, 345B) between the first and second predicted values (340A, 340B) and the corresponding received values (320) for respective times, and wherein determining the alarm condition comprises interpolating (220A, 220B) the first and second residuals (345A, 345B) and calculating first and second derivatives (355A, 355B) for the respective interpolations (350A, 350B), and
    wherein determining the alarm condition comprises calculating (225) an alarm parameter (360) by summing the absolute values of the first and second residuals, summing the absolute values of the first and second derivatives, and adding the summed residuals and derivatives; and indicating an alarm if the alarm parameter is above a threshold (230).

2. The method of claim 1, wherein the first and second models are autoregressive integrated moving average, ARIMA, models.

3. The method of claim 1 or 2, wherein the first and second models are the same and the second time series (335B) is delayed with respect to the first time series (335A).

4. The method of claim 1 or 3, wherein determining the alarm condition comprises integrating and/or digitizing the alarm parameter (360).

5. The method of any one preceding claim, wherein the equipment is one or more nodes of a communications network (100).

6. The method of claim 5, wherein the operating parameter is one or more of the following: traffic load; traffic error rate.

7. Apparatus for determining an alarm condition in equipment, the apparatus (600) comprising a processor (610) and memory (630) said memory containing instructions (635):

    receive values of an operating parameter of the equipment over time (640);
    calculate first predicted values of the operating parameter at future times using a first model over a first time series of the received values (645);

        calculate second predicted values of the operating parameter at the future times using a second model over a second and different time series of the received values (650);
        wherein the first time series (335A) is associated to more recently received values than the second time series (335B);
        determine the alarm condition using the first and second predicted values (655), wherein the alarm condition is determined by: calculating first and second residuals between the first and second predicted values and the corresponding received values for respective times (215A, 215B); and
        interpolating the first and second residuals and calculating a first and second derivative for the respective interpolations (220A, 220B),
        wherein determining the alarm condition comprises calculating an alarm parameter by summing the absolute values of the first and second residuals, summing the absolute values of the first and second derivatives, and adding the summed residuals and derivatives (225); and indicating an alarm if the alarm parameter is above a threshold (230).

8. A computer program comprising instructions which, when executed on a processor, cause the processor to carry out the method of any one of claims 1 to 6.

9. A computer program product comprising non-transitory computer readable media having stored thereon a computer program according to claim 8.


**Patentansprüche**

1. Verfahren zum Bestimmen eines Alarmzustands in einer Ausrüstung, das Verfahren umfassend:

    Empfangen von Werten (320) eines Betriebsparameters der Ausrüstung (105, 110) im Laufe der Zeit (205A, 205B);
    Berechnen (210A) erster vorhergesagter Werte (340A) des Betriebsparameters zu zukünftigen Zeiten unter Verwendung eines ersten Modells (325A) über eine erste Zeitreihe (335A) der empfangenen Werte;
    Berechnen (210B) zweiter vorhergesagter Werte (340B) des Betriebsparameters zu den zukünftigen Zeiten unter Verwendung eines zweiten Modells (325B) über eine zweite und unterschiedliche Zeitreihe (335B) der empfangenen Werte, wobei die erste Zeitreihe (335A) mit kürzlich empfangenen Werten im Vergleich zu der zweiten Zeitreihe (335B) assoziiert ist;
    Bestimmen (225, 230) des Alarmzustands unter Verwendung der ersten (340A) und zweiten (340B) vorhergesagten Werte, wobei das Bestimmen des Alarmzustands das Berechnen (215A, 215B) erster und zweiter Restgrößen (345A, 345B) zwischen den ersten und zweiten vorhergesagten Werten (340A, 340B) und den entsprechenden empfangenen Werten (320) für jeweilige Zeiten umfasst, und
    wobei das Bestimmen des Alarmzustands ein Interpolieren (220A, 220B) der ersten und zweiten Restgrößen (345A, 345B) und das Berechnen erster und zweiter Ableitungen (355A, 355B) für die jeweiligen Interpolationen (350A, 350B) umfasst, und
    wobei das Bestimmen des Alarmzustands das Berechnen (225) eines Alarmparameters (360) durch ein Summieren der Absolutwerte der ersten und zweiten Restgrößen, das Summieren der Absolutwerte der ersten und zweiten Ableitungen und ein Addieren der summierten Restgrößen und Ableitungen umfasst; und Anzeigen eines Alarms, falls der Alarmparameter über einem Schwellenwert (230) liegt.

2. Verfahren nach Anspruch 1, wobei die ersten und zweiten Modelle autoregressive integriert gleitende Durchschnittsmodelle, ARIMA-Modelle, sind.

3. Verfahren nach Anspruch 1 oder 2, wobei das erste und das zweite Modell gleich sind und die zweite Zeitreihe (335B) in Bezug auf die erste Zeitreihe (335A) verzögert ist.

4. Verfahren nach Anspruch 1 oder 3, wobei das Bestimmen des Alarmzustands ein Integrieren und/oder ein Digitalisieren des Alarmparameters (360) umfasst.

5. Verfahren nach einem der vorstehenden Ansprüche, wobei die Ausrüstung ein oder mehrere Knoten eines Kommunikationsnetzwerks (100) ist.

6. Verfahren nach Anspruch 5, wobei der Betriebsparameter einer oder mehrere der folgenden ist: Verkehrslast; Verkehrsfehlerrate.

7. Vorrichtung zum Bestimmen eines Alarmzustands in einer Ausrüstung, die Vorrichtung (600) umfassend einen Prozessor (610) und einen Speicher (630), wobei der Speicher Anweisungen (635) enthält:

Empfangen von Werten eines Betriebsparameters der Ausrüstung im Laufe der Zeit (640);
Berechnen erster vorhergesagter Werte des Betriebsparameters zu zukünftigen Zeiten unter Verwendung eines ersten Modells über eine erste Zeitreihe der empfangenen Werte (645);
Berechnen zweiter vorhergesagter Werte des Betriebsparameters zu den zukünftigen Zeiten unter Verwendung eines zweiten Modells über eine zweite und unterschiedliche Zeitreihe der empfangenen Werte (650);
wobei die erste Zeitreihe (335A) mit kürzlich empfangenen Werten im Vergleich zu der zweiten Zeitreihe (335B) assoziiert ist;
Bestimmen des Alarmzustands unter Verwendung der ersten und zweiten vorhergesagten Werte (655), wobei der Alarmzustand bestimmt wird durch: Berechnen erster und zweiter Restgrößen zwischen den ersten und zweiten vorhergesagten Werten und den entsprechenden empfangenen Werten für jeweilige Zeiten (215A, 215B); und
Interpolieren der ersten und zweiten Restgrößen und Berechnen einer ersten und zweiten Ableitung für die jeweiligen Interpolationen (220A, 220B),
wobei das Bestimmen des Alarmzustands das Berechnen eines Alarmparameters durch das Summieren der Absolutwerte der ersten und zweiten Restgrößen, das Summieren der Absolutwerte der ersten und zweiten Ableitungen und das Addieren der summierten Restgrößen und Ableitungen (225) umfasst; und Anzeigen eines Alarms, falls der Alarmparameter über einem Schwellenwert (230) liegt.

8. Computerprogramm, umfassend Anweisungen, die, wenn sie auf einem Prozessor ausgeführt werden, den Prozessor veranlassen, das Verfahren nach einem der Ansprüche 1 bis 6 vorzunehmen.

9. Computerprogrammprodukt, umfassend nichtflüchtige computerlesbare Medien, auf denen ein Computerprogramm nach Anspruch 8 gespeichert ist.

**Revendications**

1. Procédé de détermination d'une condition d'alarme dans un équipement, le procédé comprenant :

la réception de valeurs (320) d'un paramètre de fonctionnement de l'équipement (105, 110) au fil du temps (205A, 205B) ;
le calcul (210A) de premières valeurs prédites (340A) du paramètre de fonctionnement à des moments futurs à l'aide d'un premier modèle (325A) sur une première série temporelle (335A) des valeurs reçues ;
le calcul (210B) de secondes valeurs prédites (340B) du paramètre de fonctionnement aux moments futurs à l'aide d'un second modèle (325B) sur une seconde série temporelle différente (335B) des valeurs reçues, dans lequel la première série temporelle (335A) est associée à des valeurs reçues plus récemment que la seconde série temporelle (335B) ;

la détermination (225, 230) de la condition d'alarme à l'aide des premières (340A) et des secondes (340B) valeurs prédites, dans lequel la détermination de la condition d'alarme comprend le calcul (215A, 215B) de premiers et seconds résidus (345A, 345B) entre les premières et secondes valeurs prédites (340A, 340B) et les valeurs reçues correspondantes (320) pour des moments respectifs, et

dans lequel la détermination de la condition d'alarme comprend l'interpolation (220A, 220B) des premiers et seconds résidus (345A, 345B) et le calcul de premières et secondes dérivées (355A, 355B) pour les interpolations respectives (350A, 350B), et

dans lequel la détermination de la condition d'alarme comprend le calcul (225) d'un paramètre d'alarme (360) en sommant les valeurs absolues des premiers et seconds résidus, en sommant les valeurs absolues des premières et secondes dérivées, et en additionnant les résidus et les dérivées sommés ; et l'indication d'une alarme si le paramètre d'alarme est supérieur à un seuil (230).

2. Procédé selon la revendication 1, dans lequel le premier et le second modèle sont des modèles autorégressifs à moyenne mobile intégrée, ARIMA.

3. Procédé selon la revendication 1 ou 2, dans lequel le premier et le second modèle sont identiques et la seconde série temporelle (335B) est retardée par rapport à la première série temporelle (335A).

4. Procédé selon la revendication 1 ou 3, dans lequel la détermination de la condition d'alarme comprend l'intégration et/ou la numérisation du paramètre d'alarme (360).

5. Procédé selon l'une quelconque des revendications précédentes, dans lequel l'équipement est un ou plusieurs nœuds d'un réseau de communication (100).

6. Procédé selon la revendication 5, dans lequel le paramètre de fonctionnement est l'un ou plusieurs parmi ce qui suit : charge de trafic ; taux d'erreur du trafic.

7. Appareil permettant de déterminer une condition d'alarme dans un équipement, l'appareil (600) comprenant un processeur (610) et une mémoire (630), ladite mémoire contenant des instructions (635) :

   recevoir des valeurs d'un paramètre de fonctionnement de l'équipement au fil du temps (640) ;

   calculer de premières valeurs prédites du paramètre de fonctionnement à des moments futurs à l'aide d'un premier modèle sur une première série temporelle des valeurs reçues (645) ;

   calculer de secondes valeurs prédites du paramètre de fonctionnement aux moments futurs à l'aide d'un second modèle sur une seconde série temporelle différente des valeurs reçues (650) ;

   dans lequel la première série temporelle (335A) est associée à des valeurs reçues plus récemment que la seconde série temporelle (335B) ;

   déterminer la condition d'alarme à l'aide des premières et secondes valeurs prédites (655), dans lequel la condition d'alarme est déterminée en : calculant de premiers et seconds résidus entre les premières et secondes valeurs prédites et les valeurs reçues correspondantes pour des moments respectifs (215A, 215B) ; et

   interpoler les premiers et seconds résidus et calculer une première et une seconde dérivée pour les interpolations respectives (220A, 220B),

   dans lequel la détermination de la condition d'alarme comprend le calcul d'un paramètre d'alarme en sommant les valeurs absolues des premiers et seconds résidus, en sommant les valeurs absolues des premières et secondes dérivées, et en additionnant les résidus et les dérivées sommés (225) ; et l'indication d'une alarme si le paramètre d'alarme est supérieur à un seuil (230).

8. Programme informatique comprenant des instructions qui, lorsqu'elles sont exécutées sur un processeur, amènent le processeur à mettre en oeuvre le procédé selon l'une quelconque des revendications 1 à 6.

9. Produit-programme informatique comprenant un support lisible par ordinateur non transitoire sur lequel est stocké un programme informatique selon la revendication 8.

FIG 1

200

205 — Receive traffic performance values from first time series

210A — Calculate predicted values using a first time series and ARIMA model

210B — Calculate predicted values using ARIMA model

215A — Calculate residual between receive values and ARIMA predicted values

215B — Calculate residual between traffic data and ARIMA output

220A — Interpolate residuals and determine derivative

220B — Interpolate residuals and determine derivative

225 — Calculate alarm parameter (Sum absolute values of residuals and derivatives, weight, add together)

230 — If alarm parameter (integrated) above threshold, indicate alarm condition

FIG 2

FIG 3

FIG 4

Fig 5

EP 4 128 660 B1

**600**

610

630

635

620

Receive operating
parameter values — 640

Calculate first predicted
value at future time using
model over first time series — 645

Calculate second predicted
value at the future time
using model over different
time series — 650

Determine alarm condition
using the first and second
predicted values — 655

FIG 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018160177 A1

- US 2019102718 A1